# EUROPEAN PATENT APPLICATION

(11) **EP 0 669 382 A1**
(43) Date of publication of application: **30.08.1995**
(21) Application number: 94200514.1
(22) Date of filing: 28.02.1994
(51) Int. Cl.: C09D 167/00

(54) **Use of a polyester in the preparation of coatings for the interior of can ends**

(71) Applicant: DSM N.V., NL-6411 TE Heerlen (NL)
(72) Inventor: Westerhof, Wilhelmina, NL-8023 AA Zwolle (NL); Kolk, Dirk Jan, NL-8041 AB Zwolle (NL); Van Riggelen, Wilhelmus Johannes Paulus S. M., NL-7608 AK Almelo (NL)

(57) **Abstract**

The invention relates to the use of a polyester having a glass transition temperature of at least 40 ° C in the preparation of coatings for the interior of can ends. Preferably, the polyester is hydroxyl functional.

The polyester has to be crosslinked with for example amino resins or epoxy resins.

## Description

The invention relates to the use of a polyester in the preparation of coatings for the interior of can ends.

Coating compositions for the inside of beer, beverage and food cans must be approved for direct food contact. The fundamental function of the inside coatings on cans and ends is to protect the packed product to maintain its nutritional value, texture, color and flavor when purchased and used by the consumer. To meet these requirements, the organic film must be free of any material which might extract into the packed product and must maintain its integrity over the product recommended shelf life. The ingredients in the can must not make contact with the metal surface. On the whole, current commercial coating compositions for cans and ends, have met all these performance criteria. The inside coatings for can ends (lids) are based on either solution types polyvinylchloride or dispersion type polyvinylchloride. The precoated metal sheets are subjected to severe elongative and compressive stresses during the can forming process of the fabrication of can ends. The integrity of the respective coating must be maintained during all the specific fabrication operations. The easy open ends, for two-piece beverage cans for example, are stamped from precoated aluminium coil and are fed through a serie of presses where the rivet, scaring and tab making steps occur. Coatings for ends must be highly flexible to withstand this series of operations.

The article "PVC in container coatings and approaches to its replacement" by M. Hickling (Polymeric Materials Science and Engineering, Volume 65, American Chemical Socienty Fall Meeting 1991, New York, pages 285-286) elucidates that there exists a need for PVC replacement by other resins.

The performance offered by PVC coatings is somewhat offset by the fact that unstabilized PVC degrades above 100°C by elimination of HCI. The release of HCI can initiate corrosion reactions particularly on steel substrates. Hence, great care is needed in organosol formulation to ensure fineness of grind and adequate thermal stabilization. This degradation has caused complications in recycled and incineration of PVC containing waste. The chlorine content of steel recovered from such waste has been considered too high for many uses, but the amount of steel recovered in this way is rarely high enough to be significant. The polyenes produced also undergo secondary reactions in which it is possible to produce aromatic groups. These may generate dioxins whose presence can be detected in the emissions from incinerators burning PVC containing materials. The most dramatic reaction to this has been in Holland where it was claimed that the detection of dioxins in milk sold through supermarkets resulted from contamination of cattle grazing land by a waste incinerator. This claim led to demands by environmental groups (supported by supermarkets in Holland and Germany and later by major food and beverage packers) for the removal of PVC from packaging.

The aim is to remove PVC from can coatings.

It is the object of the present invention to provide a resin which can be used to replace PVC in the preparation of coatings for the interior of can ends.

These resins have particularly to meet requirements relating to acetic acid extraction tests such as those demanded for can coatings by the CIVO laboratories in Holland. Work in various systems has shown some initial promise in fabrication performance but most have fallen down in general pack resistance properties and particularly in the so called CIVO migration test. This test is described in "Verpakking en gebruiksartikelen besluit B1 par. 4.2. (Government printing office)." Conditions for these tests are set out in Richtlijn 93/8/EEG of the Commision of 15 March 1993.

The invention is characterized in that the resin is a polyester resin having a glass transition temperature (Tg) of at least 40 _{°} C.

These polyesters result in coatings having an excellent behaviour with respect to acetic acid and having a very good flexibility of the coating.

Also other requirements relating to physical characteristic application properties and film performance of the resulting coating such as for example a stable predetermined viscosity of the wet coating composition, a flow evenly on application to avoid dewetting, wrinkling or perforations, no air drying or solids accumulation on coater, relatively wide cure window, good adhesion, develop hardness for abrasion, mar and block resistance, resistance to yellowing and overbake, maintain integrity during pasteurization and sterilization processes, enhance mobility for high speed can end production, maintain film integrity on can end fabrication, countersink, score and rivet areas of converted ends, and porosity are good.

According to a preferred embodiment of the invention, the glass transition temperature is at least 50 _{°} C.

Suitable polyesters include for example hydroxyl-, carboxyl-, epoxy- and phosphoric acid functional polyesters.

Preferably, the polyester is a hydroxylfunctional polyester.

Suitable polyesters according to the invention may have a hydroxylnumber between 5 and 150, preferably between 50 and 100 mg KOH/gram resin, a molecular weight (Mn) between 800 and 10.000 (determined by gel permeation chromatography (GPC); polystyrene standard) and a molecular weight (Mw) between 8000 and 100.000 (also determined by GPC).

A hydroxyl group containing polyester or a carboxyl-functional polyester can be obtained by causing polyalcohols to react with acids or acid anhydrides by choosing a certain molar ratio of the polyalcohols and the acids or acid anhydrides. This ratio may vary for example between 1.2:1.0 and 1.0:1.0 for the preparation of a hydroxyl-functional polyester and may vary between 1.0:1.2 and 1.0:1.0 for the preparation of a carboxyl functional polyester.

Suitable polyalcohols for the preparation of the polyester include, for example, ethylene glycol, propylene glycol (1,2), propylene glycol (1,3), methylpropylene glycol 1,3, diethylene glycol, butanediol (1,2), butanediol (1,3), butanediol (1,4), hexanediol (1,6), neopentyl glycol, 2,2,4 trimethylpentanediol (1,3), ester of hydroxypivalic neopentyl glycol, tricyclodecanedimethanol, cyclohexanedimethanol, bisphenol-A-bishydroxyethyl ether, trimethylolpropane and/or pentaerythritol.

Suitable acids for the preparation of the polyesters include, for example, isophthalic acid, terephthalic acid (dimethylester of terephthalic acid or isophtalic acid), adipic acid, fumaric acid, sebacic acid, hexahydroterephthalic acid, decanedicarboxylic acid, azelaic acid, 5-t-butylisophthalic acid and/or dimerised fatty acids or acid anhydrides such as phthalic anhydride, tetrahydrophthalic anhydride, succinic anhydride, maleic anhydride, trimellitic anhydride, pyromellitic anhydride and/or hexahydrophthalic anhydride.

The polyester according to the invention can be branched by containing tri- or more functional polycarboxylic acid (anhydride) or polyol components in an amount of at most 15 mol %, preferably between 6 and 12 mol % to the total acid component or glycol component. These branched polyesters result in an improved adhesion and flexibility of the coating before and after the migration tests in acetic acid when compared with lineair polyesters.

The esterification reaction is preferably carried out in a nitrogen atmosphere at temperatures of between 180°C and 260 _{°} C. Catalysts such as dibutyltin oxide, tin- chloride or tetrabutoxy titanate, and antioxidants such as triphenyl phosphite may be used as additives. The reaction water released during the reaction is removed by distillation. The desired degree of esterification is reached by means of azeotropic distillation or vacuum in the last phase. The reaction results in a polyester that can subsequently be dissolved or emulsified in water, an organic solvent or a mixture of solvents. Suitable solvents include aromatic hydrocarbons such as for example Solvesso 200TI (Esso), esters of glycol ethers, such as for example methylpropylene glycol acetate (MPA) or ethylpropylene glycol acetate.

The solids content of the polyester can for example range between 45 and 80 % and is preferably between 50 and 65%

The polyester has to be crosslinked with a crosslinker such as for example an amino group containing resin, an epoxy group containing resin, a phenoxy group containing resin, an epoxyphosphate ester or a phenolic resin.

A suitable catalyst for the curing reaction includes for example dodecyl benzene sulphonic acid.

Preferably amino resins and epoxy resins are used.

Suitable amino resins include for example benzoguanamine resins, melamine resins and/or ureaformaldehyde resins.

Preferably, the amino resin is a benzoguanamine resin and/or melamine resin.

Benzoguanamine and melamine resins can be obtained by converting benzoguanamine and melamine, respectively, into methylol compounds, with the aid of formaldehyde, and then etherifying said methylol compounds with (C,-C₄) alcohols so as to obtain the desired degree of etherification. The amount of formaldehyde per mole of amino compound varies between 2 and 4 moles in the case of benzoguanamine and between 3 and 6 moles when use is made of melamine. Alkaline conditions are usually chosen for the methylolation step. In the subsequent etherification with the aid of alcohols (preferably n-butanol or isobutanol) use is made of molar amounts of between 0.5 and 1.5 moles per mole of formaldehyde. The etherification takes place under acid conditions and the reaction water formed is removed by azeotropic distillation. As end product, a benzoguanamine resin or a melamine resin is obtained and dissolved in the alcohol used for the etherification. Optionally, the concentration and viscosity can be adjusted to the values required by distillative removal of this alcohol.

Suitable epoxy resins include, for example, bisphenol-A-epoxy compounds, hydrogenated bisphenol-A-epoxy compounds and aliphatic epoxy compounds. Preferably, bisphenol-A-epoxy compounds, such as for example the diglycidyl ether of bisphenol-A and oligomers thereof are used.

Suitable epoxy resins generally have an epoxy equivalent weight between 150 and 4000.

The weight ratio polyester:amino resin and/or epoxy resin is generally between 95:5 and 60:40 (based on solid resin).

A cured coating, based on a polyester according to the invention will generally have a glass transition temperature of at least 40 _{°} C. A cured coating having a glass transition temperature of 40 _{°} C or more can also be obtained with polyesters having a glass transition temperature less than 40 _{°} C in combination with epoxy resins and or phenoxy resins. However, a disadvantage of these systems is the very low solid content of about 30% of the paint.

The coatings based on the polyester according to the invention are especially suited for coating of the ends of the cans (so-called can ends) but they can also be used for interior coatings for aluminium and steel cans. The can ends can be coated by roller coat application. Generally the coating weight of such coatings is about 2-12 mg/square inch.

The curing of the coated metal substrates which will be fabricated into can ends, particularly can ends which contain easy-opening tabs, can take place by two different processes.

A first process, the so-called "coil coating" is a process were enormous rolls of steel or aluminium are unwound, coated, heat cured and rewound. The total heating time in the oven is generally about 8 to 40 seconds with a peak metal temperature (P.M.T.) reaching about 205 _{°} C-280 _{°} C. After this can ends or easy open ends, are stamped from the pre-coated aluminium or steel coil and are fed through a series of presses where the rivet, scoring and tab making steps occur.

The second process, the so-called "sheet coating", is a process were metal sheets (about 1 m²) are coated. Generally the stoving conditions for the sheet coating process are between 6 and 12 minutes at peak metal temperatures of about 170°C-210°C.

The invention will be further elucidated by the following examples without, however, being limited thereto.

### Examples

### Example I

### Preparation of a polyester resin

8.4 moles ethyleneglycol (EG), 1.4 moles propyleneglycol (PG), 0.9 moles trimethylolpropane (TMP), 3.7 moles terephthalic acid (TPA), 6.3 moles isophtalic acid (IPA) and 0.05 part by weight dibutyltinoxide were heated in a glass reaction flask with a mechanical stirrer, a thermometer and a distillation arrangement with vigreux, in a nitrogen atmosphere. The esterification reaction started at 180°C and the reaction water formed was removed by distillation. The polyester was dissolved in a mixture of solvents (Solvesso 200 and MPA in a weight ratio 4:1 The maximum reaction temperature was 230 °C. At 230 °C azeotropic distillation was started using xylene until an acid number lower than 7 was reached. The polyester had the following characteristics:
- Tg:53°C
- hydroxylvalue: 60 mg KOH/gram resin
- acid value: 3 mg KOH/gram resin
- Mw: 60.000
- solids content: 55%

### Comparative Example A

### Preparation of a polyester

Example I was repeated using, 8.4 moles ethyleneglycol, 1.4 moles propyleneglycol, 0.9 moles trimethylolpropane, 3.6 moles terepthalic acid, 4.5 moles isophthalic acid, 1.9 moles adipicacid and 0.05 parts by weight dibutyltinoxide. The polyester had the following characteristics:
- Tg:23°C
- hydroxyl value: 60 mg KOH/gram resin
- acid value: 3 mg KOH/gram resin
- Mw: 60.000
- solids content: 55%

### Example 11

### Preparation of a coating

31,6 parts by weight of a resin according to Example I were dissolved in 45,1 parts by weight of a mixture of solvents aromatic hydrocarbons (Dowanol PM TI )/n-butylacetate/ aromatic hydrocarbon (Solvesso 150)/butylglycol/n-butanol (in a weight ratio 18:3:60:17:2), 6,6 parts by weight benzoguanamine resin, 6,6 parts by weight hexamethoxymelamine resin, 9,5 parts by weight epoxy novolac resin and 0,6 parts by weight of dodecylbenzenesulfonic acid as catalyst.

### Comparative Example B

### Preparation of a coating

The method of Example II was repeated with the difference that the polyester according to Comparative Example A was used instead of the polyester according to Example I.

The paints were applied with a roller-coater on an aluminium substrate used for beer and beverage easy open can ends. The stoving conditions and coating weight are mentioned in Table I.

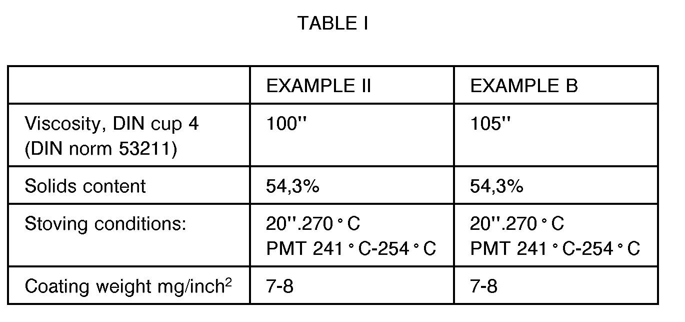

In Table II the properties of the coatings are summarized.

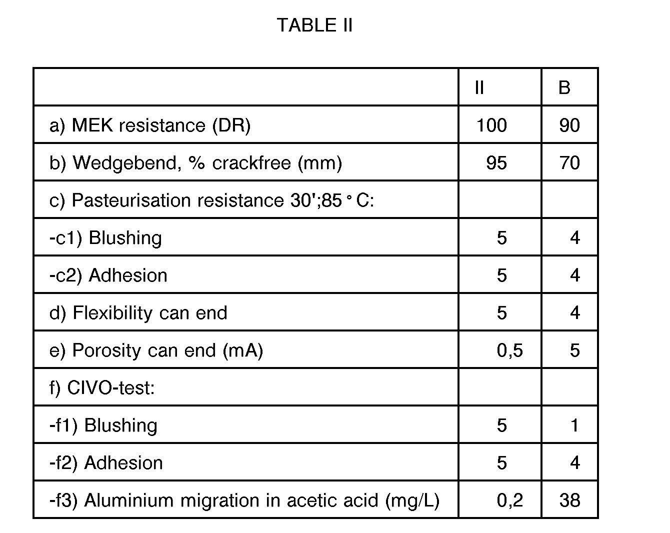

These properties were determined as follows:

### a. MEK Resistance

This test is conducted to dermine the solvent resistance. This will be done by counting the number of dubble rubs (forwards and back) necessary to remove the coating down to the metal. Rubbing is carried out with a piece of cotton wool-soaked in a solvent (methyl ethyl ketone). The result is reported as a number of dubble rubs from 0-100 (numbers above 100 are all reported as > 100).

### b. Wedge bend

This test is conducted to determine the flexibility. A cooled panel (100 mm by 40 mm) is bent over a 6 mm cylindrical mandrel. The folded panel thus produced is then impacted (4,5 Nm) in a device (the wedge- bend tester) to form a wedge-shaped contour, flat at one end and 6 mm diameter at the other end. This test piece is then immersed in acidified 3% hydrochloric acid saturated copper sulphate solution for 4 minutes in order to stain any cracks in the coating. The distance in millimeters, which is crackfree is measured. The percentage crackfree is recorded. The higher the % crackfree, the higher the flexibility.

### c. Pasteurization resistance

This test is done to determine the adhesion and blush resistance of the coating after being submitted for 30 minutes in hot water (85 _{°} C). After this the coated can ends are removed from the water, dried and cross-hatched by a scribe with at least 3 vertical and 3 horizontal lines. No. 610 Scotch brand cellophane tape ("Scotch" and "Cellophane" are trade marks) is firmly placed over the crosshatched area and is then pulled straight up from the surface of the panel.

The blush resistance of the coatings is also determined by observing the coating for 5 minutes after removal from the water. Blushing is a milky discoloration or haze in the film, generally uniform over the whole area but sometimes blotchy or spotty.

Both the degree of blushing and adhesion is then expressed on a numerical scale in which 1 = poor; 4 = good and 5 = very good.

### d. Flexibility of can end

The can end (206 shell) stamped out of the precoated aluminium is imersed in acified (3% hydrochloric acid) saturated copper sulphate solution in order to stain any breaks in the coating.

Judgement: 1 = poor; 4 = good and 5 = very good (no breaks).

### e. Porosity of coating on the can ends

The porosity of the coating after the fabrication of the can end. The enamel rater test is used to determine the amount of metal exposure (measured in milliamperes) after the coated metal has been fabricated into beer and beverage-can ends. This test is conducted using a Waco Enamel Rater with an Enamel Rater end-cup attachment. The end-cup, which contains an electrode, is filled about half way with 1 percent electrolyte solution. The can end to be tested is placed on the cup with the coated side towards the inside of the cap. The cup is then rotated so that the electrolyte solution is in contact with the coated end. The electrode in the cap should be covered by the electrolyte solution. The other electrode is placed in contact with the uncoated side of the end. A 6,3 Volt potential is applied between the two electrodes during 5 secondes. Any curent leakage is measured in milliamperes.

Judgement: amount of milliampere (mA) will be reported.

### f. CIVO-test

Coating on can end (206 shell) is tested during: 2 hours at 70 _{°} C in 3% acetic solution and followed by 10 days at 40 _{°} C in 3% acetic solution.

After CIVO-test the test can ends were judged for:
f1) Blistering 1 = poor; 4 = good and 5 = very good
f2) Adhesion 1 = poor; 4 = good and 5 = very good
f3) Aluminium migration: The concentration (in mg/L) of aluminium is measured in the acetic acid solution.

These experiments show that the use of a polyester according to the invention results in a coating having good mechanical properties and results in a very low migration of aluminium in acetic acid solution.

## Claims

1. Use of a polyester having a glass transition temperature of at least 40 _{°} C in the preparation of coatings for the interior of can ends.

2. Use of a polyester according to claim 1, characterized in that the glass transition temperature is at least 50°C.

3. Use of a polyester according to any one of claims 1-2, characterized in that the polyester is a hydroxyl functional polyester.

4. Use of a binder composition comprising a polyester according to any one of claims 1-3 and a crosslinker in the preparation of coatings for the interior of can ends.

5. Use of a binder composition according to claim 4, characterized in that the crosslinker is an amino resin or an epoxy resin.

6. A coating composition for the interior of can ends based on a polyester or a binder composition according to any one of claims 1-5.

7. A can end coated with a composition according to claim 6.

8. Process for the coating of the interior of can ends characterized in that the curing of the coating based on a polyester acording to any one of claims 1-3 and a crosslinker, takes place by the coil coating process or by the sheet coating process.
